# EUROPEAN PATENT APPLICATION

(11) **EP 1 170 385 A2**
(43) Date of publication of application: **09.01.2002**
(21) Application number: 01115607.2
(22) Date of filing: 02.07.2001
(51) Int. Cl.: C21C 5/52

(54) **Device for applying injection lances or burners to the side walls of electric furnaces for steelmaking**

(30) Priority: 04.07.2000 IT MI001510
(71) Applicant: ELTI S.r.l., 24060 Sovere (Bergamo) (IT)
(72) Inventor: Macario, Federico, 24065 Lovere (Prov. of Bergamo) (IT); Bianchi, Renato, 24060 Sovere (Prov. of Bergamo) (IT)
(74) Representative: Modiano, Guido, Dr.-Ing.

(57) **Abstract**

A device for applying injection lances or burners to the side walls of electric furnaces for steelmaking, comprising a supporting body (2) which is associable with the side wall (3) of a furnace (4) in order to close an opening (5) which is predefined in the wall. The supporting body is provided with a passage (6) for the delivery end of an injection lance (7) or of a burner. The passage is inclined downward in the direction of injection of the lance or burner that it is designed to accommodate and its length is adapted to place its outlet (9) proximate to the inner face (10) of the layer of refractory material (11) that covers the lower portion of the side walls (3) of the furnace (4).

## Description

The present invention relates to a device for applying injection lances or burners to the side walls of electric furnaces for steelmaking.

In the production of steel by means of electric furnaces, during the various steps of the operation of the furnace it is necessary to introduce various chemicals in the furnace for various purposes depending on the steps of the process.

In particular, during the melting step, in order to preheat the iron scrap introduced in the furnace and assist the action of the electrodes in melting, so-called oxyfuel burners are used which are applied to the side walls of the furnace and introduce in the furnace oxygen and fuel in order to produce a flame for heating the metal.

During the subsequent refining step, various chemical substances, such as for example carbon in the form of powder of coal or graphite, oxygen, but also hydrocarbons such as for example methane, are introduced in the furnace in order to obtain the intended formulation of the metal, eliminating unwanted substances and facilitating the formation of foamy slag above the liquid metal and also maintaining specific physical-chemical characteristics for the liquid metal and for the slag.

These substances, during the refining step, are generally injected into the furnace by using injection lances inserted through the deslagging door of the furnace by means of a robotized arm.

The use of the deslagging door of the furnace for handling such injection lances is not devoid of problems, since opening the deslagging door during the steelmaking process negatively affects the operation of the furnace.

The current trend is to reduce as much as possible the use of the deslagging door for the injection of chemical substances into the furnace, concentrating this activity on the side walls of the furnace.

However, the mounting of injection lances on the side walls of the furnace is not free from problems and drawbacks, since it causes the delivery end of the lances to be further spaced above the liquid metal bath and the slag than when the injection lances are inserted through the deslagging door.

This greater spacing has the drawback that it produces a dispersion, inside the furnace, of substances which cannot reach the slag or liquid metal, reducing the effectiveness of the injection of the chemical substances in the furnace and causing several drawbacks in the assembly for aspirating waste gases from the furnace.

On the other hand, the position of the injection lances applied to the side walls of the furnace cannot be lowered beyond a certain limit unless one reduces significantly the angle of incidence of the jet of the lance on the bath of liquid metal or slag. As the application point of the lance is shifted downward, said angle of incidence must in fact be reduced accordingly, so that the jet ejected by the lance does not interfere with the upper rim of the refractory material that lines the lower part of the side walls of the furnace.

In order to solve this problem, it has also been suggested to modify the side walls of the furnace by providing a recess of the side walls of the furnace at the regions where the injection lances are adapted to be mounted. This refinement, however, has the drawback that it causes the ducts for cooling the side walls of the furnace, inside which cooling water is circulated, to be more exposed to the action of the scrap and to thermal effects, entailing the danger of breakage, which can be extremely dangerous, since it would cause a considerable amount of water to spill into the furnace, with the danger of explosions.

The aim of the present invention is to solve the above-described problems, by providing a device which allows to apply injection lances to the side walls of electric furnaces for steelmaking in a position which is close to the free surface of the slag and of the liquid metal bath yet maintaining an angle of incidence of the jet ejected by the injection lance onto the slag or onto the liquid metal bath which is wide enough to achieve high injection effectiveness.

Within this aim, an object of the invention is to provide a device which can be used not only for the application of injection lances but also to apply burners of the oxyfuel type to the side walls of the electric furnace.

Another object of the invention is to provide a device which, by allowing to mount an injection lance adjacent to the bath of liquid metal and to the slag so as to obtain a sufficiently wide angle of incidence, reduces the dispersion of the substances injected above the slag and therefore also avoids the problems related to waste gas disposal.

Another object of the invention is to provide a device which does not alter the structure of the side walls of conventional furnaces and offers the greatest assurances of safety during use.

This aim and these and other objects which will become better apparent hereinafter are achieved by a device for applying injection lances or burners to the side walls of electric furnaces for steelmaking, comprising a supporting body which is associable with the side wall of a furnace in order to close an opening which is predefined in said wall, said supporting body being provided with a passage for the delivery end of an injection lance or of a burner, characterized in that said passage is inclined downward in the direction of injection of the lance or burner that it is designed to accommodate and has a length which is adapted to place its outlet proximate to the inner face of the layer of refractory material that covers the lower portion of the side walls of the furnace.

Further characteristics and advantages of the invention will become better apparent from the description of two preferred but not exclusive embodiments of the device according to the invention, illustrated only by way of non-limitative example in the accompanying drawings, wherein:

Figures 1 to 5 are views of a first embodiment of the device according to the invention, and more particularly:
Figure 1 is a partially sectional view of the device according to the invention, applied to the side wall of an electric furnace for steelmaking, which is shown schematically in a sectional view taken along a vertical plane;
Figure 2 is a partially sectional view of the device according to the invention, taken from the side adapted to be arranged inside the electric furnace;
Figure 3 is a sectional view of Figure 2, taken along the line III-III;
Figure 4 is a sectional view of Figure 3, taken along the line IV-IV;
Figure 5 is a view of the device according to the invention, applied to the side wall of an electric furnace, which is shown schematically and from its outer side;
Figure 6 is a sectional view, taken along a vertical plane, of the device according to the invention in a second embodiment.

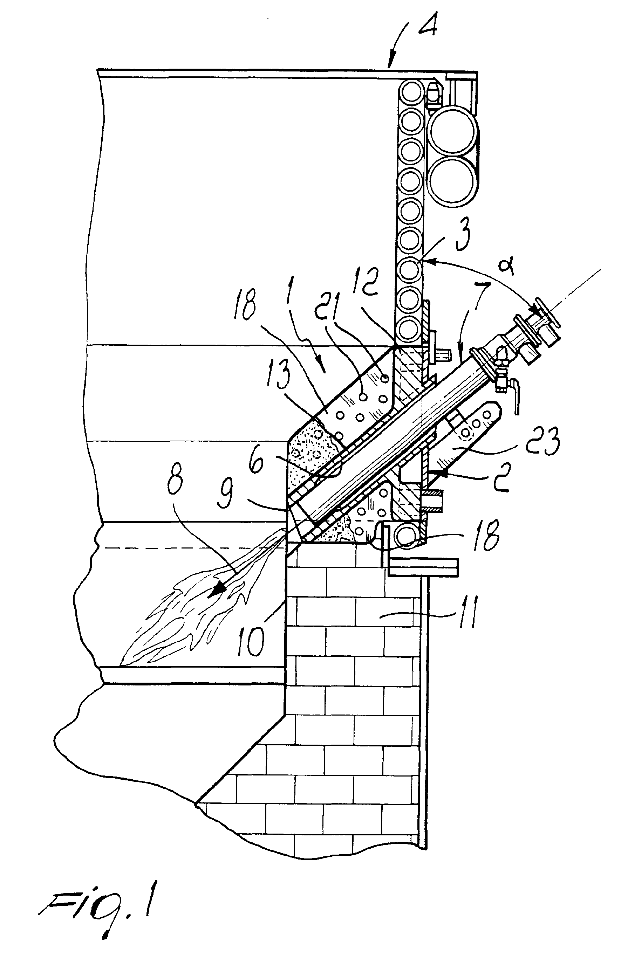

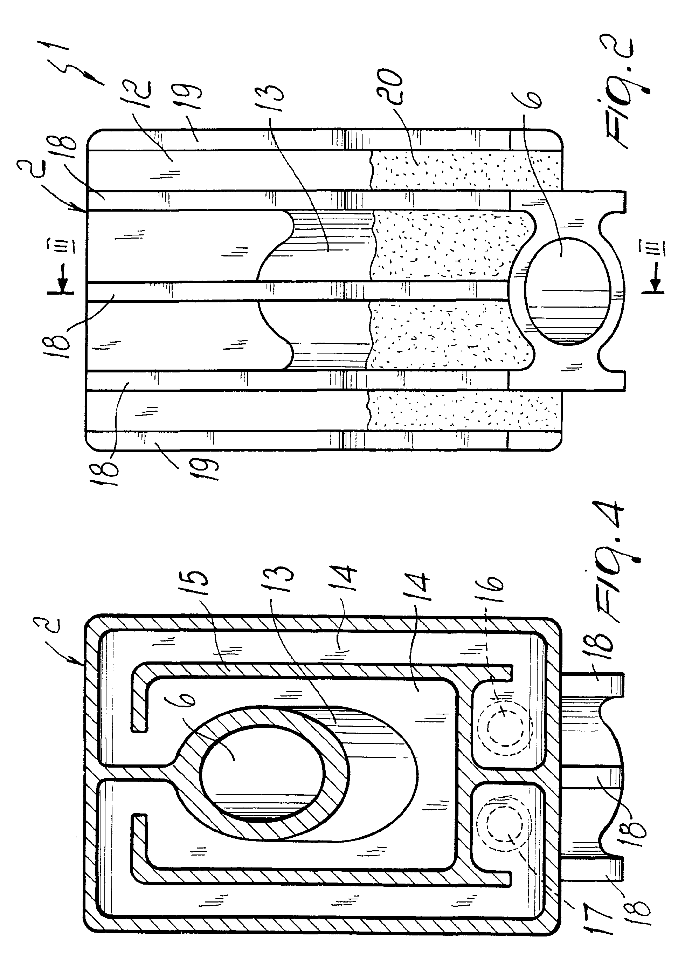

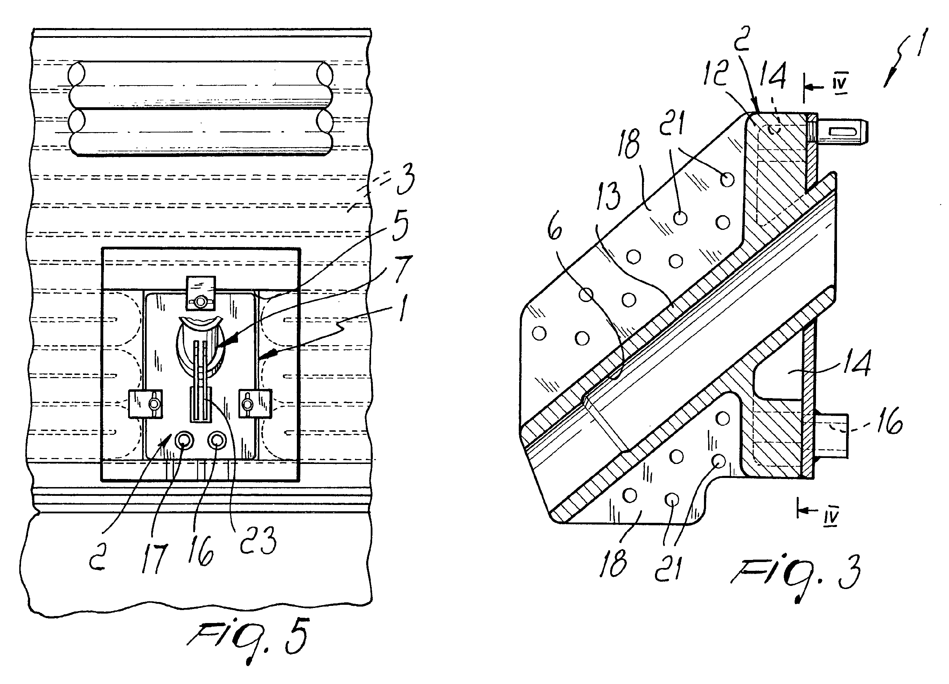

With reference to Figures 1 to 5, the device according to the invention, generally designated by the reference numeral 1, comprises a supporting body 2, which is associable, preferably in a detachable manner, with the side wall 3 of an electric furnace 4 so as to close an opening 5 which is predefined in said side wall 3. A passage 6 for the delivery end of an injection lance 7 is formed in the supporting body 2.

According to the invention, the passage 6 is inclined downward, in the direction of injection of the lance, indicated by the arrow 8, that it is designed to accommodate, and its length is adapted to place its outlet 9 proximate to the inner face 10 of the layer of refractory material 11 that covers the lower portion of the side walls 3 of the furnace 4.

Conveniently, the device according to the invention comprises means for cooling the supporting body 2.

More particularly, the supporting body 2 comprises a substantially flat portion 12 adapted to be arranged on the plane of arrangement of the wall 3 of the furnace in the region where it is to be applied. The passage 6 is formed by a tubular body 13 which protrudes from the face of the portion 12 that is designed to be directed toward the inside of the furnace 4.

The cooling means comprise an interspace 14 formed in the portion 12 of the supporting body 2. The interspace 14, by means of internal partitions 15, is labyrinth-like and is connected to an inlet port 16 and to an outlet port 17 which open onto the side of the flat portion 12 that is adapted to be directed toward the outside of the furnace. The ports 16 and 17 can be connected respectively to a duct for supplying a cooling fluid, for example water, and to a duct for removing said cooling liquid so as to obtain, inside the interspace 14, a circulation of the cooling fluid so as to avoid damage to the device according to the invention as a consequence of the high temperatures reached inside the furnace.

Conveniently, the tubular body 13 is connected to the portion 12 by means of fins 18.

The fins 18 have the dual function of stiffening the tubular body 13 and of connecting the tubular body 13 to the portion 12 in which the cooling fluid circulates, so as to effectively also achieve cooling of the tubular body 13.

The gaps between the fins 18, and between the fins 18 and a peripheral rim 19 which lies on the two opposite vertical sides of the face of the supporting body 2 that is adapted to be directed toward the inside of the furnace, can be filled with refractory material 20. Holes 21 can be provided in the fins 18 and on the rims 19 in order to facilitate the grip of the refractory material 20 on these elements.

The refractory material 20, by covering substantially completely the surface of the device that is designed to be arranged inside the furnace 4, protects the device from the heat generated inside the furnace and from the danger of damage caused by the scrap introduced in the furnace during the step that precedes melting.

Preferably, the supporting body 2, the tubular body 13 and the fins 18 are formed monolithically and are made of a material with high thermal conductivity, such as for example copper, so as to achieve excellent heat exchange between the device and the cooling fluid circulated inside it.

The supporting body 2 is completed by fixing means, which are constituted for example by lugs or wings 23 that protrude from its face designed to be directed toward the outside of the furnace and by means of which the lance 7 can be fixed to the device.

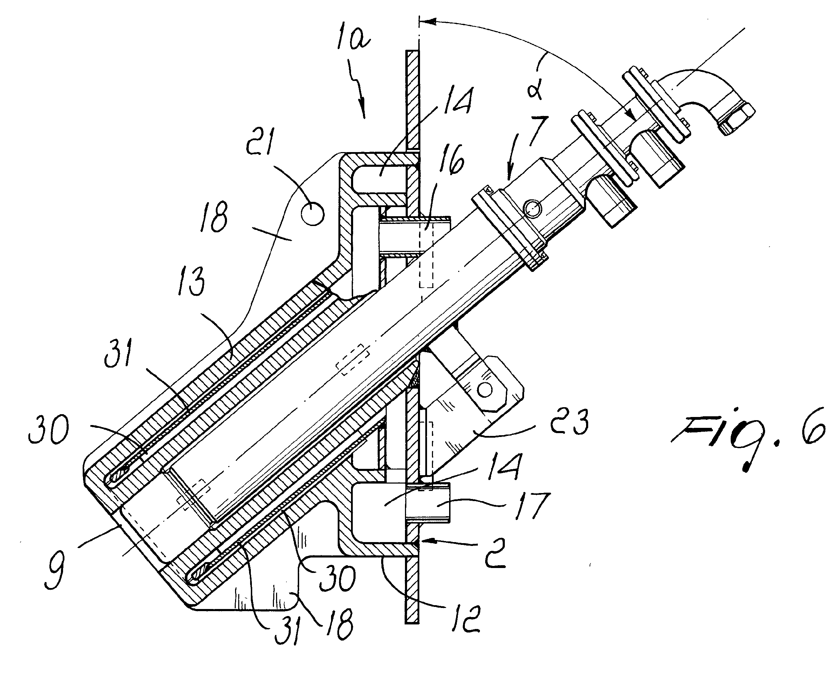

In the second embodiment, shown in Figure 6, in which the device according to the invention is generally designated by the reference numeral 1a and the elements of the device that correspond to the elements that have already been described with reference to the first embodiment have been designated by the same reference numerals, the cooling means directly affect the tubular body 13 as well.

More particularly, in the side wall of the tubular body 13 there is an interspace 30 which is substantially cylindrical and has an annular transverse cross-section and is connected to the interspace 14 provided in the portion 12 of the supporting body 2 so that the cooling fluid circulates also inside the interspace 30, achieving even greater effectiveness in cooling the supporting body 2.

The interspace 30 is conveniently divided into two portions connected to each other, proximate to the axial end of the interspace 30 that is designed to be directed toward the inside of the furnace, by a longitudinal partition 31 which, like the partitions 15 for the interspace 14, provides a more regular flow of the cooling fluid along the interspace 30, further improving the cooling effect.

Thanks to the greater cooling effectiveness that is obtained, the fins 18 can be provided in a limited number, and in the extreme case a single fin can be provided, without having to embed said fin or fins in the refractory material.

Preferably, the tubular duct 13 is inclined with respect to the plane of arrangement of the portion 12 at an angle α which is substantially between 30° and 60° so as to achieve, for the jet ejected by the injection lance 7, a high angle of incidence with respect to the liquid metal and the slag.

The device according to the invention is adapted to be mounted on the side wall of a furnace directly above the layer of refractory material 11 that covers the internal face of the lower region of the side wall 3 or even to be embedded, proximate to the upper edge, in said layer of refractory material 11.

In this manner, the device according to the invention allows to place an injection lance 7 in the immediate vicinity of the free surface of the slag and of the liquid metal in the furnace.

Since the passage 6 for the lance 7 lies inside a tubular body 13 whose outlet 9, when the device is mounted on the side wall 3 of a furnace, lies proximate to the inner face of the layer of refractory material 11, it is possible to place the delivery end of the lance 7 in the immediate vicinity of the slag that covers the liquid metal bath and it is also possible to maintain a high angle of incidence of the jet of the lance without problems in terms of interference between the jet ejected by the lance and the layer of refractory material 11.

For this reason, by means of the device according to the invention it is possible to achieve high efficiency in the injection, by means of lances, of chemical substances inside an electric furnace, allowing said chemical substances to reach the slag and the liquid metal bath with minimal dispersions above the slag, which cause no problems as regards the apparatus for aspirating and disposing of the waste gases from the inside of the furnace.

The device according to the invention, in view of the fact that it does not require recesses of the side walls of the furnace, also avoids problems in terms of damage to said side walls as a consequence of impacts of the scrap introduced in the fumace and of the high temperatures generated inside the furnace, and accordingly ensures maximum safety during the operation of the furnace.

It should also be noted that although the injection lance 7 is placed so that its delivery end lies proximate to the inner face of the layer of refractory material 11, there are no problems as regards damage to the lance by the temperatures generated inside the furnace, since the lance is effectively protected by the tubular body 13 in which it is inserted. Moreover, the cooling of the tubular body 13 also cools the lance 7.

Although the device according to the invention has been conceived in particular for supporting injection lances on the side walls of an electric furnace, it can be used in any case also to support burners to be applied to the side walls of the furnace.

In this case, the flame dispensing end of the burner is inserted in the tubular duct 13 instead of the lance 7.

The lance 7 can be used not only to inject chemical substances in the fluid state, such as for example oxygen, or other gases, as well as substances in powder or particulate form, such as for example carbon as graphite powder, lime, or metals, but also to generate a heating flame in replacement of the conventional oxyfuel burners that are currently used.

In practice, it has been observed that the device according to the invention fully achieves the intended aim and objects, since it allows to mount, without problems, injection lances on the side walls of an electric furnace, placing the delivery end of the lances or burners in the immediate vicinity of the slag that covers the liquid metal bath and allowing to maintain, for the jet ejected by the lance, a wide angle of incidence with respect to the slag or liquid bath.

The device thus conceived is susceptible of numerous modifications and variations, all of which are within the scope of the inventive concept; all the details may further be replaced with other technically equivalent elements.

In practice, the materials employed, so long as they are compatible with the specific use, as well as the dimensions, may be any according to requirements and to the state of the art.

The disclosures in Italian Patent Application No. MI2000A001510, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A device for applying injection lances or burners to the side walls of electric furnaces for steelmaking, comprising a supporting body which is associable with the side wall of a furnace in order to close an opening which is predefined in said wall, said supporting body being provided with a passage for the delivery end of an injection lance or of a burner, **characterized in that** said passage is inclined downward in the direction of injection of the lance or burner that it is designed to accommodate and has a length which is adapted to place its outlet proximate to the inner face of the layer of refractory material that covers the lower portion of the side walls of the furnace.

2. The device according to claim 1, **characterized in that** it comprises means for cooling said supporting body.

3. The device according to claims 1 and 2, **characterized in that** said supporting body comprises a substantially flat portion which is adapted to be arranged on the plane of arrangement of the wall of the furnace in the region where it is to be applied, said passage being formed by a tubular body which protrudes from the face of said portion of the supporting body that is designed to be directed toward the inside the furnace.

4. The device according to one or more of the preceding claims, **characterized in that** said tubular body is connected by at least one fin to the face of said substantially flat portion that is adapted to be directed toward the inside of the furnace.

5. The device according to one or more of the preceding claims, **characterized in that** said cooling means comprise an interspace for the circulation of a cooling fluid, said interspace being formed in said supporting body.

6. The device according to one or more of the preceding claims, **characterized in that** the gaps between said fins are filled with refractory material.

7. The device according to one or more of the preceding claims, **characterized in that** said supporting body and said tubular body are formed monolithically and are made of a material having high thermal conductivity.

8. The device according to one or more of the preceding claims, **characterized in that** said supporting body has, on its face adapted to be directed toward the outside of the furnace, means for fixing the lance or burner.

9. The device according to one or more of the preceding claims, **characterized in that** the axis of said tubular duct is inclined, with respect to the plane of arrangement of said substantially flat portion, at an angle α substantially between 30° and 60°.

10. The device according to one or more of the preceding claims, **characterized in that** said interspace of the cooling means is formed in said substantially flat portion of the supporting body.

11. The device according to one or more of the preceding claims, **characterized in that** said interspace of the cooling means is formed in the side wall of said tubular body.

12. An electric furnace for steelmaking, **characterized in that** it comprises at least one supporting device for injection lances or burners, according to one or more of the preceding claims, said supporting body being arranged so as to close an opening formed in the side wall of the furnace directly above the layer of refractory material or proximate to the upper end of the layer of refractory material that covers the lower region of the side walls of the furnace.
